# FASCICULE DE BREVET EUROPEEN

(11) **EP 2 476 183 B1**
(45) Date de publication et mention de la délivrance du brevet: **13.01.2016**
(21) Numéro de dépôt: 10752080.1
(22) Date de dépôt: 22.07.2010
(51) Int. Cl.: H02J 7/14, H02P 9/00

(54) **ALTERNATEUR A REDRESSEMENT SYNCHRONE POUR VEHICULE AUTOMOBILE, EQUIPE DE MOYENS ELECTRONIQUES DE GESTION DE DEFAUTS**
LICHTMASCHINE MIT SYNCHRONER GLEICHRICHTUNG FÜR EIN KRAFTFAHRZEUG MIT ELEKTRONISCHEM FEHLERMANAGEMENT
ALTERNATOR HAVING SYNCHRONOUS RECTIFICATION FOR A MOTOR VEHICLE, PROVIDED WITH ELECTRONIC DEFECT MANAGEMENT MEANS

(30) Priorité: 07.09.2009 FR 0956067
(43) Date de publication de la demande: 18.07.2012
(73) Titulaire: Valeo Equipements Electriques Moteur, 94046 Créteil Cedex (FR)
(72) Inventeur: TUNZINI, Marc, F-78000 Versailles (FR); GRAMMONT, Olivier, F-62152 Hardelot Plage (FR); DUTHILLEUL, Guillaume, F-33770 Salles (FR); DOS SANTOS, Victor, F-71200 Le Creusot (FR)
(86) Numéro de dépôt international: PCT/FR2010/051554
(87) Numéro de publication internationale: WO 2011/027056

(56) Documents cités:
- FR-A1- 2 909 492
- FR-A1- 2 917 253

## Description

La présente invention concerne d'une manière générale le domaine des machines électriques tournantes notamment pour véhicule automobile. Plus particulièrement, l'invention concerne un alternateur à redressement synchrone équipé de moyens électroniques de gestion de défauts.

Dans le contexte de la réduction des émissions de CO₂ et du développement d'alternateurs à haut rendement, la technologie du redressement synchrone appliquée aux alternateurs pour véhicule automobile présente un intérêt certain.

Le redressement synchrone fait appel à un pont de redressement à transistors de puissance, généralement de type MOSFET. Une électronique de commande est également prévue pour mettre en forme des signaux de commande appropriés pour les transistors de puissance.

Par rapport à la technologie classique des alternateurs avec pont de redressement à diodes, la part de l'électronique dans les machines à redressement synchrone s'accroît de manière significative.

En termes de coût, la part de l'électronique dans une machine à redressement synchrone peut être comprise entre 30 et 50% du coût total de la machine. A titre de comparaison, la part en coût de l'électronique dans les machines à redressement par pont de diodes est de l'ordre de 25%. Une panne de l'électronique exigeant un remplacement de la pièce défaillante peut donc entraîner des répercutions de coût conséquentes en opération de service après-vente.

La fiabilité de l'électronique est essentielle pour la fiabilité globale de la machine et entraîne des contraintes nouvelles pour les concepteurs. Ces contraintes sont d'autant plus sévères que la tendance actuelle chez les constructeurs automobiles est d'étendre la durée de garantie des véhicules.

Dans FR2909492A1, il est divulgué un procédé de signalisation d'une anomalie intervenant dans l'électronique de puissance d'un alternateur polyphasé. Le procédé est mis en oeuvre dans un alternateur équipé d'un régulateur capable de contrôler une non-conformité d'une valeur courante d'une tension de phase de l'alternateur par rapport à une valeur nominale de celle-ci et de signaler toute non-conformité. Selon ce procédé, un défaut d'un redresseur de tension dans l'électronique de puissance est signalé en simulant une non-conformité d'une tension de phase.

Dans FR2917253A1, il est divulgué un procédé mis en oeuvre dans une machine électrique tournante pour limiter la tension de sortie de celle-ci lorsque cette tension de sortie dépasse un seuil de tension prédéterminé supérieur à une tension nominale de la machine. La machine comporte une pluralité d'enroulements de phases et un circuit de puissance comportant une pluralité de branches formées chacune d'un pont d'interrupteurs électroniques et apte à alimenter un réseau d'alimentation électrique. Le procédé commande un verrouillage d'au moins une branche du circuit de puissance dans un état de conduction lorsque la tension de sortie dépasse le seuil de tension prédéterminé.

Il est souhaitable de proposer des solutions autorisant une amélioration de la fiabilité globale d'un alternateur à redressement synchrone et, plus particulièrement, de la fiabilité de l'électronique dans un alternateur.

Selon un premier aspect, l'invention concerne un alternateur à redressement synchrone pour véhicule automobile, comprenant un stator, un rotor, des moyens de redressement synchrone pour redresser en une tension continue des tensions alternatives fournies par le stator et des moyens de régulation de tension pour réguler la tension continue, l'alternateur comprenant également des moyens de détection de défauts pour détecter des défauts dans les moyens de redressement synchrone et fournir des informations de détection de défauts aux moyens de régulation de tension.

Conformément à l'invention, au moins une des informations de défaut est utilisée pour provoquer dans les moyens de régulation de tension une ouverture d'un circuit d'excitation alimentant en courant une bobine d'excitation du rotor de manière à produire dans les moyens de régulation de tension une indication de défaut correspondant à ladite au moins une des informations de défaut. De préférence, l'ouverture du circuit d'excitation est provoquée à travers une commande appropriée d'un transistor de démagnétisation rapide inclus dans le circuit d'excitation.

Selon une caractéristique particulière, les informations de défaut sont fournies aux moyens de régulation de tension à des entrées de défaut recevant également des signaux de phase représentatifs des tensions alternatives fournies par le stator.

Selon encore une autre caractéristique particulière, les moyens de détection de défauts comportent des moyens pour détecter des défauts se produisant dans des branches d'un pont de redressement fi transistors des moyens de redressement synchrone, la détection étant réalisée à partir de signaux de phase prélevés en des points milieu des branches, de signaux de commande appliqués à des électrodes de commande des transistors et de tensions présentes sur les bornes de tension positive et négative de l'alternateur.

Selon encore une autre caractéristique particulière, les moyens de détection de défauts comportent des moyens pour détecter des défauts de sur-échauffement se produisant dans des branches du pont de redressement à transistors des moyens de redressement synchrone.

Selon une forme de réalisation particulière, les moyens de détection de défauts comportent des moyens pour détecter un mauvais raccordement éventuel d'une batterie du véhicule automobile à un réseau d'alimentation électrique auquel est également raccordé l'alternateur lorsque celui-ci est monté dans le véhicule, la détection étant réalisée à partir d'une mesure de tension apparaissant entre les bornes de tension positive et négative de l'alternateur. De plus, dans cette forme de réalisation, une détection d'un mauvais raccordement de la batterie est effective lorsqu'une tension négative comprise entre -1 Volt et -2 Volt est mesurée entre les bornes de tension positive et négative de l'alternateur.

Selon une autre caractéristique particulière, l'alternateur comprend des moyens pour protéger l'alternateur lorsqu'un mauvais raccordement de la batterie est détecté par les moyens de détection de défauts. Les moyens pour protéger peuvent par exemple comporter un circuit à pompe de charge et/ou un isolateur photovoltaïque.

Selon encore une autre caractéristique particulière, les moyens de détection de défauts comportent également des moyens pour mémoriser des informations sur des défauts détectés et/ou transmettre celles-ci à une unité de commande électronique du véhicule.

D'autres aspects, buts et avantages de la présente invention apparaîtront mieux à la lecture de la description détaillée suivante d'une forme de réalisation particulière de celle-ci, donnée à titre d'exemple non limitatif et faite en référence aux dessins annexés, dans lesquels :
- la Fig.1 est un bloc-diagramme général d'une forme de réalisation de l'alternateur selon l'invention ;
- la Fig.2 est un schéma simplifié d'un pont de redressement à transistors inclus dans l'alternateur de la Fig.1 ;
- la Fig.3 montre des bloc-diagrammes d'un circuit de commande de pont de redressement et d'un circuit de protection et transmission de défauts inclus dans l'alternateur de la Fig.1 ; et
- la Fig.4 montre une forme de réalisation particulière d'un circuit de protection inclus dans l'alternateur de la Fig.1, prévu pour protéger l'alternateur contre une inversion de raccordement de la batterie du véhicule.

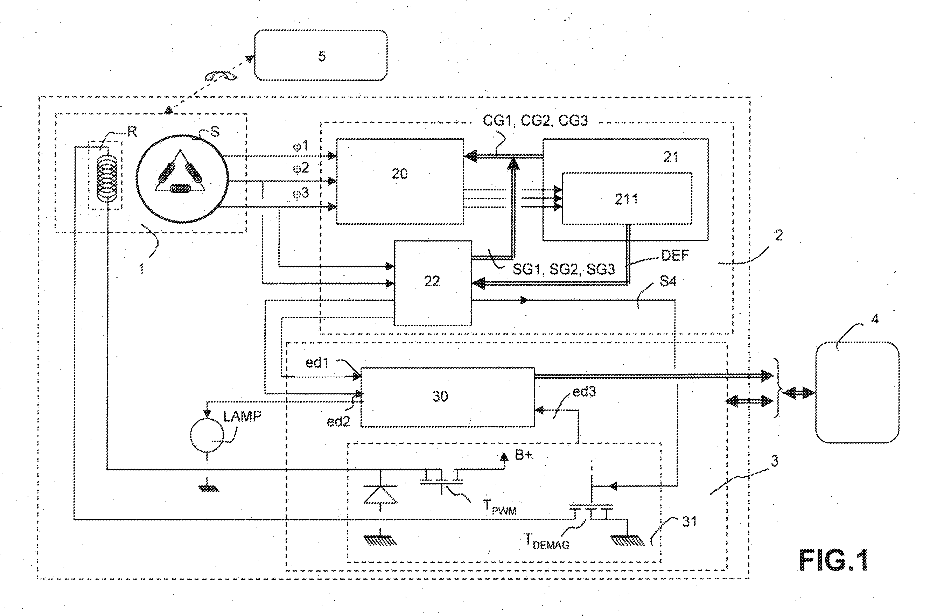

Comme montré à la Fig.1, l'alternateur selon l'invention comprend une machine électrique tournante 1, un circuit de redressement de tension 2 et un régulateur de tension 3.

Dans cette forme de réalisation, la machine 1 est une machine triphasée de type Lundell et comprend, de manière classique, un stator S et un rotor R à griffes comportant une bobine d'excitation. Le rotor R est entraîné en rotation à travers une courroie de transmission le reliant au vilebrequin du moteur thermique 5 du véhicule.

Le circuit de redressement de tension 2 est de type à redressement synchrone et comprend un pont de redressement de tension 20, un circuit de commande de pont 21 et un circuit de protection et transmission de défauts 22.

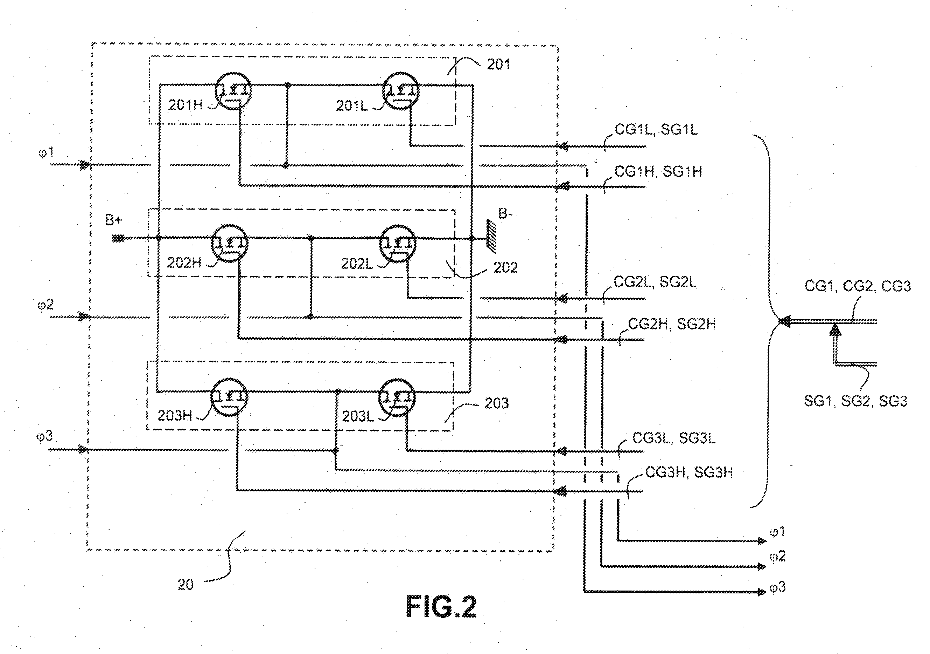

Comme montré à la Fig.2, le pont de redressement de tension 20 est un pont à transistors MOS-FET. Des première, seconde et troisième branches de pont 201, 202 et 203 sont formées chacune de deux transistors MOS-FET 201 H et 201 L, 202H et 202L, et 203H et 203L, respectivement. Les transistors d'une même branche ont des premières électrodes de puissance (drain, source) reliées ensemble en un point milieu de branche et des secondes électrodes de puissance (drain, source) reliées respectivement à des bornes de tension B+ et B- de l'alternateur. La borne B+ délivre classiquement la tension +12V du réseau d'alimentation de tension du véhicule. La borne B- est reliée à la masse de ce même réseau d'alimentation de tension.

Trois tensions de phase φ1, φ2 et φ3 fournies par la machine 1 sont appliquées respectivement sur les trois points milieu des branches de pont 201, 202 et 203 du pont 2 et alimentent ces branches.

Des électrodes de commande (grilles) des transistors 201 H et 201 L, 202H et 202L, et 203H et 203L, reçoivent respectivement des signaux de commande de grille CG1 H et CG1 L, CG2H et CG2L, et CG3H et CG3L. Ces signaux CG1, CG2 et CG3 commandent les transistors de telle manière à les faire fonctionner en redresseurs synchrones.

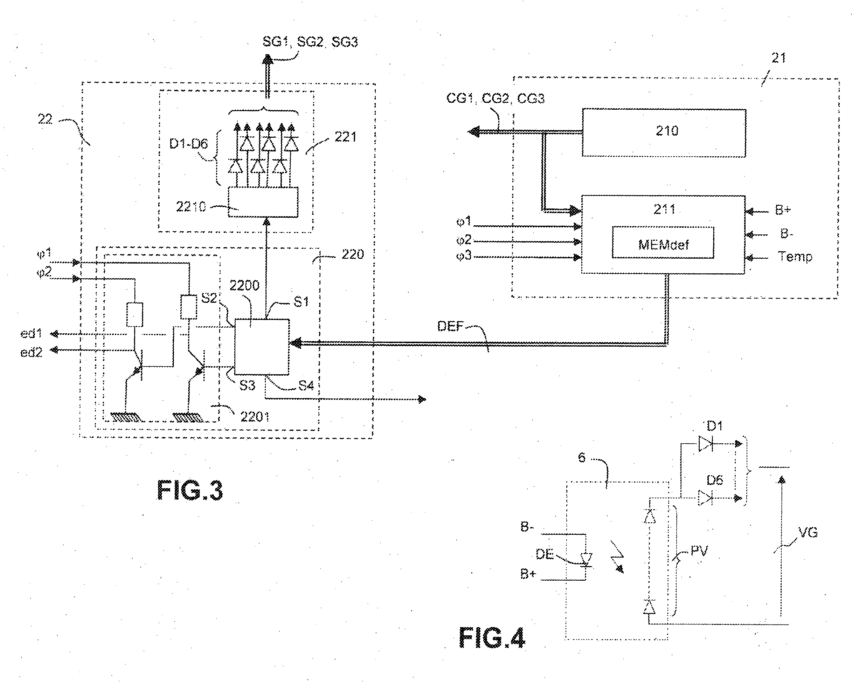

Le circuit de commande de pont 21 est montré en détail à la Fig.3. Ce circuit 21 comprend un circuit de mise en forme de signaux de commande de grille 210 et un circuit de détection de défauts 211.

Le circuit de mise en forme de signaux de commande de grille 210 réalise une mise en forme adaptée des signaux CG1, CG2 et CG3 de manière à obtenir un fonctionnement en redressement synchrone des transistors MOSFET du pont 20. Ce type de fonctionnement en redressement synchrone de transistors MOS-FET est connu de l'homme du métier est ne sera pas décrit ici.

Le circuit de détection de défauts 211 a essentiellement pour fonction de détecter des défauts dans le pont de redressement de tension 20. Cependant, certains défauts dans les bobinages statoriques du stator S pourraient, dans certaines formes de réalisation de l'invention, être détectés aussi par ce circuit 211 compte tenu des informations que contiennent les signaux fournis au circuit 211.

Dans cette forme de réalisation, le circuit de détection de défauts 211 reçoit en entrée les signaux de commande de grille CG1, CG2 et CG3, les tensions de phase φ1, φ2 et φ3, les tensions des bornes B+ et B- et une information de température Temp fournie, par exemple, un capteur de température (non représenté). A partir des valeurs de ces différents signaux qui sont comparées à des seuils et d'un traitement logique associé, le circuit de détection de défauts 211 est capable de détecter une inversion du raccordement des bornes de la batterie du véhicule (dit « reverse batterie » en terminologie anglaise), un sur-échauffement du pont 20 et des défaillances éventuelles des transistors MOS-FET.

Le ou les défauts détectés sont ici codés dans le circuit de détection de défauts 211 avant d'être transmis vers le circuit de protection et transmission de défauts 22 par le circuit 211. Par exemple, un mot binaire de défaut DEF de deux bits est prévu pour indiquer différents types de défaut. Quatre défauts différents DEF1, DEF2, DEF3 et DEF4 peuvent ainsi être codés sur deux bits dans le mot de défaut DEF.

Dans cette forme de réalisation, le défaut DEF1 est le défaut d'inversion de raccordement de batterie et les défauts DEF2, DEF3 et DEF4 sont respectivement le défaut de suréchauffement du pont de redressement de tension 20, un défaut de court-circuit dans une branche du pont 20 (transistor en court-circuit) et un défaut de circuit ouvert dans le pont 20.

Le défaut d'inversion de raccordement de batterie se produit dans le cas où, pour une raison ou pour une autre, les bornes B+ et B- de l'alternateur sont raccordées non pas aux cosses à +12V et 0V de la batterie, mais aux cosses à 0V et +12V, respectivement. Cela se produit habituellement lorsqu'un opérateur intervertit les deux câbles du véhicule qui doivent être raccordés à la batterie.

L'entité inventive a constaté que dans le cas d'un défaut DEF1 d'inversion de raccordement de batterie, une tension négative TIB comprise entre -1 V et -2 V apparaît entre les bornes B+ et B-. La présence de cette tension TIB est détectée par le circuit de détection de défauts 211 qui en déduit consécutivement un défaut DEF1 d'inversion de raccordement de batterie.

Conformément à cette forme de réalisation, lorsque le défaut d'inversion de raccordement de batterie DEF1 est détecté, l'occurrence de ce défaut est mémorisée dans une mémoire interne MEMdef du circuit de détection de défauts 211. Une telle mémorisation de l'occurrence d'un défaut d'inversion de raccordement de batterie permet au fabriquant de l'alternateur, dans certaines situations de Service Après-Vente, de dégager sa responsabilité en cas de dommages causés à l'alternateur ou au véhicule par une opération d'inversion de raccordement de batterie. Dans d'autres formes de réalisation, tous les défauts apparaissant sont mémorisés dans la mémoire interne MEMdef sous la forme par exemple d'un historique des défauts.

Le mot de défaut DEF (DEF1, DEF2, DEF3 et DEF4) est transmis par le circuit 211 au circuit de protection et transmission de défauts 22.

Comme montré à la Fig.3, le circuit de protection et transmission de défauts 22 comprend un circuit de transmission de défauts 220 et un circuit 221 de protection en cas d'inversion de raccordement de batterie.

Le circuit de transmission de défauts 220 comprend notamment un circuit de décodage 2200 et un circuit de commutation à deux transistors 2201. Le circuit de décodage 2200 reçoit le mot DEF transmis par le circuit de détection de défauts 211 et active des sorties S1, S2, S3 et/ou S4 en fonction du décodage effectué du mot DEF reçu.

La sortie S1 est activée lorsque intervient un défaut d'inversion de raccordement de batterie DEF1. La sortie S1, lorsqu'elle est active, commande l'activation du circuit de protection 221.

Le circuit de protection 221 comporte une source de tension 2210 et six sorties SG1 H, SG1 L, SG2H, SG2L et SG3H, SG3L qui délivrent chacune une tension VG fournie par la source de tension lorsque le circuit est activé par la sortie S1.

Les six sorties SG1 H, SG1 L SG2H, SG2L et SG3H, SG3L sont connectées respectivement aux grilles des transistors 201 H, 201 L, 202H, 202L et 203H, 203L à travers des diodes D1 à D6. Lorsque le circuit 221 est activé, la tension VG, de l'ordre de 6 Volts dans cette forme de réalisation, est appliquée sur les grilles des transistors 201 H, 201 L, 202H, 202L et 203H, 203L de manière à forcer ceux-ci dans un état de conduction.

Cette disposition autorise une diminution de la puissance dissipée par les transistors MOS-FET, de telle manière que l'utilisateur dispose de davantage de temps avant la détérioration du pont de redressement de tension 20 pour prendre conscience de son erreur d'inversion des câbles de batterie et supprimer le défaut.

En effet, dans le cas de ce défaut DEF1 d'inversion de raccordement de batterie, le pont 20 est soumis à une tension négative et les diodes antiparallèles des transistors MOS-FET sont alors passantes. Le courant traversant les transistors est alors extrêmement important, de l'ordre de 300 A, et si aucune disposition n'est prise, la puissance à dissiper par chaque transistor est d'environ 300 A x 0,8 V = 2400 W, la tension de 0,8 V étant la tension directe apparaissant aux bornes de la diode antiparallèle pour un courant de 300 A. La puce de silicium du transistor ne peut supporter ces conditions que pendant seulement quelques fractions de seconde.

Conformément à l'invention, du fait de l'application de la tension VG sur les grilles des transistors, ceux-ci passent dans un état de conduction, de sorte que la puissance dissipée par chaque transistor est de l'ordre de (300 A)² x 0,002 Ω = 180 W, la valeur ohmique de 0,002 Ω correspondant à la résistance équivalente du transistor dans son état de conduction. Un transistor MOS-FET de puissance peut supporter ces conditions pendant plusieurs secondes, ce qui laisse du temps à l'utilisateur pour se rendre compte de son erreur d'inversion des câbles de batterie et supprimer ce défaut.

Une source d'alimentation du circuit de protection 221 permettant d'obtenir la tension VG peut être réalisée à l'aide d'un circuit à pompe de charge tel que le circuit MAX 865 commercialisé sous la marque déposée MAXIM.

Dans une forme de réalisation différente, il est également possible d'utiliser un isolateur photovoltaïque de type PVI5050N ou PVI5080N (marques déposées), tel que montré par le repère 6 à la Fig.4. Un tel isolateur 6 permet de détecter une inversion de raccordement de batterie et d'appliquer une tension VG sur les grilles des transistors MOS-FET. Une diode émettrice DE de l'isolateur 6 est montée entre les bornes B+ et B- de telle manière que celle-ci devient passante lorsque la tension négative TIB (entre -1 V et -2 V comme indiqué précédemment), due à l'inversion de raccordement de batterie, apparaît entre ces électrodes.

Le passage d'un courant direct dans la diode émettrice DE provoque l'apparition d'une tension aux bornes d'éléments photovoltaïques PV, de l'isolateur 6. La tension VG est obtenue à partir de la tension fournie par les éléments photovoltaïques PV.

Les informations de défaut DEF1, DEF2, DEF3 et DEF4 sont transmises au régulateur de tension 3 par le circuit de transmission de défauts 220. Le régulateur de tension 3 peut ainsi déclencher des modes de fonctionnement de défaut, activer une signalisation de défaut (voyant) à l'intention de l'utilisateur du véhicule et/ou signaler l'occurrence d'un défaut à une unité de commande électronique du véhicule, telle qu'unité de contrôle moteur 4 (montrée à la Fig.1), avec laquelle le régulateur 3 est en communication. Les sorties S2, S3 et S4 du circuit 2200 sont utilisées pour la transmission des informations de défaut DEF1, DEF2, DEF3 et DEF4 au régulateur de tension 3.

Dans cette forme de réalisation, il est utilisé un régulateur 3 qui comporte des entrées de détection de défauts de phase ed1 et ed2 auxquelles sont appliqués les signaux de phase φ1 et φ2. Dans ce type de régulateur, ces entrées de défaut ed1, ed2 sont normalement prévues pour la détection de défauts de phase dans l'alternateur 1. Il est ainsi possible de détecter par ce moyen des phases en court-circuit ou en circuit ouvert. La disponibilité de ces entrées ed1 et ed2 est mise à profit dans cette forme de réalisation de l'invention pour signaler au régulateur 3 des défauts DEF détectés par le circuit de détection de défauts 211.

En fonction des défauts à signaler au régulateur 3, les entrées ed1 et ed2 sont placées à des niveaux de tension appropriés, reconnaissables par le régulateur 3 pour indiquer des défauts. Les signaux S2 et S3 forcent les états des entrées ed1 et ed2 au moyen des transistors du circuit de commutation 2201 (cf. Fig3), en fonction des défauts à signaler.

Un circuit de gestion de défauts 30 et un circuit d'excitation de rotor 31 compris dans le régulateur 3 sont montrés à la Fig.1. Le circuit de gestion de défauts 30 est le circuit incorporant les entrées de défaut ed1 et ed2 indiquées plus haut ainsi qu'une autre entrée de défaut ed3.

L'entrée de défaut ed3 permet de signaler un défaut de circuit ouvert dans le circuit d'excitation 31 du rotor R de l'alternateur. Le circuit d'excitation de rotor 31 comporte des moyens connus pour détecter et signaler un état de circuit ouvert. De tels moyens détectent un circuit ouvert par exemple du fait de la présence d'un courant d'excitation nul pendant au moins une durée supérieure à une certaine durée de seuil prédéterminée.

Comme cela apparaît à la Fig.1, le circuit d'excitation de rotor 31 comporte deux transistors T_{PWM} et T_{DEMAG}. Le transistor T_{PWM} est un transistor de puissance qui commande une modulation en largeur d'impulsion du courant d'excitation alimentant la bobine d'excitation du rotor R. Le transistor T_{DEMAG} est un transistor de puissance qui permet une ouverture du circuit d'excitation lorsqu'il est nécessaire de démagnétiser rapidement l'alternateur. Les deux transistors T_{PWM} et T_{DEMAG} sont ici tous deux des transistors de type MOSFET.

Conformément à l'invention, la présence du transistor T_{DEMAG} est ici mise à profit comme moyen de forcer une ouverture du circuit d'excitation de rotor 31 de manière à provoquer une remontée de défaut vers le circuit de gestion de défauts 30, à travers l'activation de l'entrée de défaut ed3. Lorsqu'un défaut DEF en correspondance avec une activation de la sortie S4 du circuit 2200 doit être signalé au régulateur 3, la grille du transistor T_{DEMAG} est commandée par la sortie S4 de telle manière à provoquer un blocage de ce transistor, forçant ainsi une ouverture du circuit de courant.

Le circuit de gestion de défauts 30 traitent les différentes informations de défaut qui lui parviennent à travers les entrées ed1, ed2 et ed3 de manière à, selon les applications, signaler ces défauts à l'unité de contrôle moteur 4 et/ou mettre en place éventuellement des modes de fonctionnement de défaut adaptés. Par ailleurs, le circuit de gestion de défauts 30 peut également commander l'activation d'un voyant LAMP pour signaler certains défauts à l'utilisateur du véhicule.

Conformément à l'invention, on retiendra que la transmission des informations de défaut du circuit de détection de défauts 22 vers le circuit de gestion de défauts 30 du circuit de régulation de tension 3 peut se faire par différents moyens, comme cela ressort de la description qui précède, et que différents types de codage peuvent être utilisés pour transmettre ces informations. Outre le choix de l'activation des entrées ed1, ed2 et ed3 qui sont activées pour transmettre l'information, d'autres paramètres de codage sont également utilisables comme par exemple des durées d'activation prédéterminées distinctes des entrées de défaut ed1, ed2 et ed3 afin de transmettre des informations de défaut différentes.

Par ailleurs, on notera que les différents circuits électroniques de commande qui ont été décrits ici, à savoir, les circuits 21, 22 et 3, selon les différentes formes de réalisation de l'invention, pourront être implémentés sous la forme de un ou plusieurs ASICs.

Bien entendu, l'invention ne se limite pas aux formes de réalisation particulières qui viennent d'être décrites. D'autres réalisations sont possibles selon les applications envisagées par l'homme du métier et restent dans la portée des revendications annexées.

## Revendications

1. Alternateur à redressement synchrone pour véhicule automobile, comprenant un stator (S), un rotor (R), des moyens de redressement synchrone (20, 21) pour redresser en une tension continue (B+) des tensions alternative (φ1, φ2, φ3) fournies par ledit stator (S), des moyens de régulation de tension (3) pour réguler ladite tension continue, et des moyens de détection de défauts (211, 22) pour détecter des défauts (DEF) dans lesdits moyens de redressement synchrone (2) et fournir des informations de détection de défauts (DEF, S2, S3, S4) auxdits moyens de régulation de tension (3), **caractérisé en ce qu'**au moins une desdites informations de défaut est utilisée pour provoquer dans lesdits moyens de régulation de tension (3) une ouverture (T_{DEMAG}) d'un circuit d'excitation (31) alimentant en courant une bobine d'excitation dudit rotor (R) de manière à produire dans lesdits moyens de régulation de tension (S) une indication de défaut (ed3) correspondant à ladite au moins une des informations de défaut.

2. Alternateur selon la revendication 1, **caractérisé en ce qu'**au moins une desdites informations de défaut est fournie auxdits moyens de régulation de tension (3) à des entrées de défaut (ed1, ed2) recevant également des signaux de phase (φ2, φ3) représentatifs desdites tensions alternatives fournies par ledit stator (S).

3. Alternateur selon la revendication 1, **caractérisé en ce que** ladite ouverture du circuit d'excitation est provoquée à travers une commande appropriée d'un transistor de démagnétisation rapide (T_{DEMAG)} inclus dans ledit circuit d'excitation (3).

4. Alternateur selon l'une quelconque des revendications précédentes 1 à 3, **caractérisé en ce que** lesdits moyens de détection de défauts comportent des moyens (211) pour détecter des défauts se produisant dans des branches (201, 202, 203) d'un pont de redressement à transistors desdits moyens de redressement synchrone (20), ladite détection étant réalisée à partir de signaux de phase (φ1, φ2, φ3) prélevés en des points milieu desdites branches (201, 202, 203), de signaux de commande (CG1 L, CG1 H, CG2L, CG2H, CG3L, CG3H) appliqués à des électrodes de commande desdits transistors (201 L, 201 H, 202L, 202H, 203L, 203H) et de tensions présentes sur les bornes de tension positive et négative (B+, B-) de l'alternateur.

5. Alternateur selon l'une quelconque des revendications précédentes 1 à 4, **caractérisé en ce que** lesdits moyens de détection de défauts comportent des moyens (211, Temp) pour détecter des défauts de sur-échauffement se produisant dans des branches du pont de redressement à transistors des moyens de redressement synchrone.

6. Alternateur selon l'une quelconque des revendications précédentes 1 à 4, **caractérisé en ce que** lesdits moyens de détection de défauts comportent des moyens pour détecter (211, 6) un mauvais raccordement éventuel d'une batterie dudit véhicule automobile à un réseau d'alimentation électrique auquel est également raccordé ledit alternateur lorsque celui-ci est monté dans ledit véhicule, ladite détection étant réalisée à partir d'une mesure de tension (TIB) apparaissant entre les bornes de tension positive et négative (B+, B-) de l'alternateur.

7. Alternateur selon la revendication 6, **caractérisé en ce qu'**il comprend des moyens (S1, 221, SG1H, SG1L, SG2H, SG2L, SG3H, SG3L) pour protéger l'alternateur lorsqu'un mauvais raccordement de la batterie est détecté par lesdits moyens de détection de défauts.

8. Alternateur selon la revendication 7, **caractérisé en ce que** lesdits moyens pour protéger comporte un circuit à pompe de charge et/ou un isolateur photovoltaïque (6).

9. Alternateur selon l'une quelconque des revendications 1 8, **caractérisé en ce que** lesdits moyens de détection de défauts comportent des moyens (MEMdef) pour mémoriser des informations sur des défauts détectés et/ou transmettre celles-ci à une unité de commande électronique (4) du véhicule.

## Patentansprüche

1. Lichtmaschine mit synchroner Gleichrichtung für ein Kraftfahrzeug, umfassend einen Stator (S), einen Rotor (R), Mittel zum synchronen Gleichrichten (20, 21), um Wechselspannungen (φ1, φ2, φ3), die von dem Stator (S) abgegeben werden, in eine Gleichspannung (B+) gleichzurichten, Spannungsregelmittel (3), um die Gleichspannung zu regulieren und Fehlererfassungsmittel (211, 22), um Fehler (DEF) in den Mitteln zum synchronen Gleichrichten (2) zu erfassen und den Spannungsregelmitteln (3) Fehlererfassungsinformationen (DEF, S2, S3, S4) bereitzustellen, **dadurch gekennzeichnet, dass** mindestens eine der Fehlerinformationen verwendet wird, um in den Spannungsregelmitteln (3) ein Öffnen (T_{DEMAG}) eines Erregerkreises (31) zu bewirken, der eine Erregerspule des Rotors (R) mit Strom versorgt, um in den Spannungsregelmitteln (S) eine Fehleranzeige (ed3) zu generieren, die der mindestens einen Fehlerinformationen entspricht.

2. Lichtmaschine nach Anspruch 1, **dadurch gekennzeichnet, dass** mindestens eine der Fehlerinformationen den Spannungsregelmitteln (3) an Fehlereingängen (ed1, ed2) bereitgestellt wird, die auch Phasensignale (φ2, φ3) erhalten, die für die Wechselspannungen repräsentativ sind, die von dem Stator (S) abgegeben werden.

3. Lichtmaschine nach Anspruch 1, **dadurch gekennzeichnet, dass** das Öffnen des Erregerkreises durch eine geeignete Steuerung eines Transistors zur schnellen Entmagnetisierung (T_{DEMAG}) bewirkt wird, der in dem Erregerkreis (3) angeordnet ist.

4. Lichtmaschine nach einem der vorhergehenden Ansprüche 1 bis 3, **dadurch gekennzeichnet, dass** die Fehlererfassungsmittel Mittel (211) aufweisen, um Fehler zu erfassen, die in den Zweigen (201, 202, 203) einer Transistor-Gleichrichterbrücke der Mittel zum synchronen Gleichrichten (20) auftreten, wobei das Erfassen ausgehend von Phasensignalen (φ1, φ2, φ3), die an Mittelpunkten der Zweige (201, 202, 203) erhoben sind, von Steuersignalen (CG1L, CG1H, CG2L, CG2H, CG3L, CG3H), die an Steuerelektroden der Transistoren (201L, 201H, 202L, 202H, 203L, 203H) angelegt sind, und von Spannungen, die an der positiven und negativen Spannungsklemme (B+, B-) der Lichtmaschine vorhanden sind, durchgeführt wird.

5. Lichtmaschine nach einem der vorhergehenden Ansprüche 1 bis 4, **dadurch gekennzeichnet, dass** die Fehlererfassungsmittel Mittel (211, Temp) aufweisen, um Fehler der Überhitzung zu erfassen, die in den Zweigen der Transistor-Gleichrichterbrücke der Mittel zum synchronen Gleichrichten auftreten auftreten.

6. Lichtmaschine nach einem der vorhergehenden Ansprüche 1 bis 4, **dadurch gekennzeichnet, dass** die Fehlererfassungsmittel Mittel (211, 6) aufweisen, um einen eventuellen falschen Anschluss der Batterie des Kraftfahrzeugs an ein Stromversorgungsnetz zu erfassen, an das auch die Lichtmaschine angeschlossen ist, wenn diese in dem Fahrzeug angebracht ist, wobei das Erfassen ausgehend von einer Messung einer Spannung (TIB) durchgeführt wird, die zwischen der positiven und negativen Spannungsklemme (B+, B-) der Lichtmaschine auftritt.

7. Lichtmaschine nach Anspruch 6, **dadurch gekennzeichnet, dass** sie Mittel (S1, 221, SG1H, SG1L, SG2H, SG2L, SG3H, SG3L) aufweist, um die Lichtmaschine zu schützen, wenn ein falscher Anschluss der Batterie von den Fehlererfassungsmitteln erfasst ist.

8. Lichtmaschine nach Anspruch 7, **dadurch gekennzeichnet, dass** die Mittel zum Schützen eine Ladungspumpenschaltung und/oder einen Photovoltaik-Isolator (6) aufweisen.

9. Lichtmaschine nach einem der vorhergehenden Ansprüche 1 bis 8, **dadurch gekennzeichnet, dass** die Fehlererfassungsmittel Mittel (MEMdef) aufweisen, um Informationen über erfasste Fehler zu speichern und/oder diese an eine elektronische Steuereinheit (4) des Kraftfahrzeugs zu übertragen.

## Claims

1. Alternator with synchronous rectification for a motor vehicle, comprising a stator (S), a rotor (R), synchronous rectification means (20, 21) for rectifying alternating voltages (φ1, φ2, φ3) supplied by said stator (S) into a DC voltage (B+), voltage regulation means (3) for regulating said DC voltage, and fault detection means (211, 22) for detecting faults (DEF) in said synchronous rectification means (2) and supplying fault detection information (DEF, S2, S3, S4) to said voltage regulation means (3), **characterized in that** at least one of said fault information items is used to provoke, in said voltage regulation means (3), an opening (T_{DEMAG}) of an excitation circuit (31) supplying an excitation coil of said rotor (R) with current so as to produce, in said voltage regulation means (S), a fault indication (ed3) corresponding to said at least one of the fault information items.

2. Alternator according to Claim 1, **characterized in that** at least one of said fault information items is supplied to said voltage regulation means (3) at fault inputs (ed1, ed2) also receiving phase signals (φ2, φ3) representative of said alternating voltages supplied by said stator (S).

3. Alternator according to Claim 1, **characterized in that** said opening of the excitation circuit is provoked through an appropriate control of a rapid demagnetization transistor (T_{DEMAG}) included in said excitation circuit (3).

4. Alternator according to any one of the preceding Claims 1 to 3, **characterized in that** said fault detection means comprise means (211) for detecting faults occurring in branches (201, 202, 203) of a rectification bridge with transistors of said synchronous rectification means (20), said detection being produced from phase signals (φ1, φ2, φ3) sampled at mid-points of said branches (201, 202, 203), control signals (CG1L, CG1H, CG2L, CG2H, CG3L, CG3H) applied to control electrodes of said transistors (201L, 201H, 202L, 202H, 203L, 203H) and voltages present on the positive and negative voltage terminals (B+, B-) of the alternator.

5. Alternator according to any one of the preceding Claims 1 to 4, **characterized in that** said fault detection means comprise means (211, Temp) for detecting overheating faults occurring in branches of the rectification bridge with transistors of the synchronous rectification means.

6. Alternator according to any one of the preceding Claims 1 to 4, **characterized in that** said fault detection means comprise means for detecting (211, 6) a possible bad connection of a battery of said motor vehicle to an electrical power supply network to which said alternator is also connected when the latter is mounted in said vehicle, said detection being produced from a voltage measurement (TIB) occurring between the positive and negative voltage terminals (B+, B-) of the alternator.

7. Alternator according to Claim 6, **characterized in that** it comprises means (S1, 221, SG1H, SG1L, SG2H, SG2L, SG3H, SG3L) for protecting the alternator when a bad connection of the battery is detected by said fault detection means.

8. Alternator according to Claim 7, **characterized in that** said means for protecting comprise a charge pump circuit and/or a photovoltaic insulator (6).

9. Alternator according to any one of Claims 1 to 8, **characterized in that** said fault detection means comprise means (MEMdef) for storing information on detected faults and/or transmitting the latter to an electronic control unit (4) of the vehicle.
